# FASCICULE DE BREVET EUROPEEN

(11) **EP 1 515 529 B1**
(45) Date de publication et mention de la délivrance du brevet: **06.06.2018**
(21) Numéro de dépôt: 04077473.9
(22) Date de dépôt: 06.09.2004
(51) Int. Cl.: H04M 3/42, H04M 3/533

(54) **Procédé et système de mise en relation d'une personne avec une communauté de personnes**
Verfahren zum Verbinden von einer Person mit einer Gemeinschaft von Personen
Method for connecting a person with a community of persons

(30) Priorité: 09.09.2003 FR 0310623
(43) Date de publication de la demande: 16.03.2005
(73) Titulaire: Orange, 75015 Paris (FR)
(72) Inventeur: Paulus, François, 35000 Rennes (FR); Morucci, Stéphane, 35530 Servon-sur-Vilaine (FR); Peslerbe, André, 35830 Betton (FR)
(74) Mandataire: Vidon Brevets & Stratégie

(56) Documents cités:
- EP-A- 1 093 271
- EP-A2- 0 856 980
- US-A1- 2002 049 905
- US-B1- 6 570 964

## Description

La présente invention concerne un procédé de mise en relation d'une personne avec une communauté de personnes, ainsi qu'un système permettant de mettre en oeuvre ce procédé.

On connaît déjà des procédés de mise en relation d'une personne avec une communauté de personnes. Le plus connu d'entre eux est le protocole de discussions relayées par Internet IRC (Internet Relay Chat) ou « chat » défini par la référence technique RFC 1459 (Request For Comments en terminologie anglaise). Le système permettant de mettre en oeuvre ce procédé et donc de mettre en relation une personne avec d'autres personnes comporte un logiciel aussi appelé client ou partagiciel (ou shareware en terminologie anglaise) qui permet à la personne de se connecter à un serveur d'un réseau de serveurs IRC (p.ex : EFnet, Undernet, IRCnet, DALnet et NewNet) parmi une pluralité de réseaux IRC. Chaque réseau, qui est en quelque sorte un lieu de rencontre virtuel, possède plusieurs canaux (ou channels en terminologie anglaise) définissant des thèmes de discussions. En se connectant à un serveur, chaque personne devient utilisateur et peut donc accéder au canal de discussion choisi. Une fois connectée à un réseau, la discussion se fait sur ce réseau par échange de messages, par exemple sous la forme de texte directement entré au clavier. Dès lors que les réseaux IRC ne sont pas interconnectés, il n'est pas possible de discuter avec des utilisateurs d'autres réseaux. En revanche, il est possible de discuter avec des utilisateurs d'un autre serveur du même réseau ou de passer d'un canal de discussion à un autre canal de discussion du même réseau.

Chaque personne qui souhaite être mise en relation avec d'autres personnes doit choisir un pseudonyme (ou nickname en terminologie anglaise) à l'aide duquel elle sera identifiée en tant qu'utilisateur par les autres personnes du canal de discussion. Une fois que l'utilisateur a accédé à un canal de discussion, les messages échangés prennent la forme d'un texte simple. Les messages de l'utilisateur peuvent être transmis soit à un seul utilisateur, soit à une liste d'utilisateurs, soit à un groupe. Dans le cas du groupe, qui est le but principal du protocole IRC, le message est transmis aux différents serveurs pour lesquels des utilisateurs utilisent le même canal auquel est connecté l'utilisateur. Une telle solution est connue de EP1093271.

Ce type de procédé de mise en relation ne permet ni de reconnaître le type de message transmis, ni de localiser avec précision les utilisateurs. En outre, les utilisateurs recevant un message ne sont pas sélectionnés de manière dynamique en fonction de critères d'utilisation des informations de profils prédéfinis. Ce procédé est simplement prévu pour effectuer la mise en relation d'utilisateurs entre eux sans qu'il y ait de dispositions prévues pour faciliter l'accès à une réponse souhaitée.

Le but de l'invention est de proposer un procédé permettant de mettre en relation une personne qui a un message avec une communauté de personnes identifiées comme susceptibles d'être concernées par ce message.

Un autre but de l'invention est de proposer un système permettant de mettre en relation une personne qui a un message avec une communauté de personnes identifiées comme susceptibles d'être concernées par ce message.

A cet effet, la présente invention concerne un procédé de mise en relation d'une personne avec une communauté de personnes, ladite personne émettant un message d'un terminal de télécommunication. Le procédé selon l'invention se caractérise en ce qu'il consiste à analyser ledit message, à déterminer une communauté de personnes susceptibles d'être concernées par ce message et à transférer ledit message aux personnes de la communauté.

Selon une autre caractéristique, ledit procédé consiste en outre à adapter ledit message aux terminaux desdites personnes de ladite communauté.

Selon une autre caractéristique, ledit procédé consiste en outre à localiser avec précision ladite personne émettrice du message.

Selon une autre caractéristique, ledit procédé consiste à stocker des données concernant lesdites personnes dans une base de données utilisateurs.

Selon une autre caractéristique, ledit procédé consiste à localiser ladite personne par corrélation entre les données issues de ladite base de données utilisateurs et les données issues d'un serveur de localisation.

Selon une autre caractéristique, ledit procédé consiste à déterminer une communauté de personnes en sélectionnant les utilisateurs inscrits dans la base de données utilisateurs en fonction de critères d'utilisation des informations de profils issus d'une base de données système.

L'invention concerne également un système de mise en relation d'une personne avec une communauté de personnes, ladite personne émettant un message d'un terminal de télécommunication. Le système selon l'invention se caractérise en ce qu'il comporte un module d'analyse de messages, un module de détermination d'une communauté d'utilisateurs et un module de transfert de messages.

Selon une autre caractéristique, ledit système comporte en outre un module d'adaptation aux terminaux de télécommunication.

Selon une autre caractéristique, ledit système comporte en outre un module de localisation.

Selon une autre caractéristique, ledit système comporte une base de données utilisateurs.

Selon une autre caractéristique, ledit système comporte une base de données système.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
La Fig. 1 représente un schéma de principe du procédé selon l'invention ;
La Fig. 2 représente une première variante du procédé selon l'invention ;
La Fig. 3 représente une seconde variante du procédé selon l'invention ; et
La Fig. 4 représente une troisième variante du procédé selon l'invention.

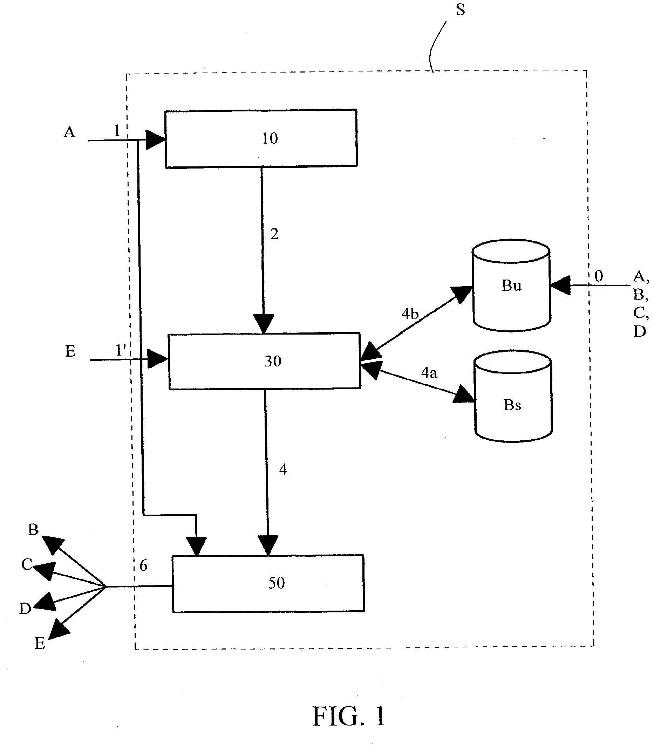

A la Fig. 1, on a représenté les groupes fonctionnels du système S prévu pour mettre en oeuvre le procédé selon l'invention. Ces groupes fonctionnels sont une base de données utilisateurs Bu, une base de données système Bs, un module d'analyse de messages 10, un module de détermination d'une communauté d'utilisateurs 30 et un module de transfert de messages 50.

La base de données utilisateurs Bu comporte l'ensemble des profils généraux des utilisateurs inscrits au service complété par des profils particuliers liés à un message que ces utilisateurs sont à même de formuler dans le futur. Un profil général est par exemple constitué des caractéristiques nominatives telles que le nom, le prénom, l'âge, la profession, le moyen d'identification de l'utilisateur représenté par un identifiant et un mot de passe, le moyen de localisation, le type de terminal utilisé, les informations que cet utilisateur est susceptible de communiquer à d'autres personnes, etc. Un profil particulier comporte par exemple des caractéristiques qui sont spécifiques à l'utilisateur considéré. Il peut s'agir, à titre d'exemple de la détention d'un brevet de secourisme, d'un niveau de disponibilité, d'une activité pratiquée, d'une zone géographique, de caractéristiques de mobilité, comme par exemple un sens de parcours, une vitesse de déplacement, des messages déjà émis par l'utilisateur, etc.,

Le niveau de disponibilité est défini par l'utilisateur à son inscription. Ce niveau de disponibilité correspond au choix d'être contacté ou non par le système lors de l'envoi d'un message par un utilisateur. Cependant, le système S peut avoir pour consigne de passer outre ce critère de disponibilité.

Les données inscrites dans la base de données utilisateurs Bu sont rendues utilisables pour le système par l'utilisateur au démarrage de l'activité. La base de données utilisateurs Bu sert de support d'informations sur les utilisateurs pour le système.

La base de données système Bs comporte des critères d'utilisation des informations de profils définis pour chaque type de messages susceptibles d'être envoyés par les utilisateurs inscrits. Ces critères d'utilisation des informations de profils peuvent être le respect ou non des disponibilités, le respect ou non de l'activité, la zone géographique à prendre en compte. Le type du message est un mot ou un groupe de mots définissant à la manière d'un titre l'objet du message. Par exemple, un type de message peut être le terme SOS pour une demande d'assistance ou le terme INFO pour une demande d'informations.

Le module d'analyse de messages 10 est prévu pour déterminer le type du message reçu par le système en récupérant l'information contenue dans un champ prévu à cet effet lorsqu'il s'agit de messages vocaux ou de MMS (Multimedia Messaging Service) ou en extrayant l'information du texte reçu lorsqu'il s'agit d'un SMS (Short Message Service). Ce module 10 peut également, dans certains cas prédéfinis, analyser le contenu du message afin d'évaluer son urgence. Le système utilise pour cela un logiciel de reconnaissance de langage naturel.

Le module de détermination d'une communauté d'utilisateurs 30 est prévu pour définir la communauté pouvant correspondre le mieux possible au message transmis par l'utilisateur-émetteur. Pour ce faire, il consulte la base de données utilisateurs Bu et la base de données système Bs. La base de données système Bs associe un type de message à un ensemble de critères d'utilisation des informations de profils. La base de données utilisateurs Bu associe des profils à des utilisateurs. Le rôle du module de détermination d'une communauté d'utilisateurs 30 est d'effectuer le tri des utilisateurs de la base de données utilisateurs Bu en faisant concorder les critères d'utilisation des informations de profils de la base de données système Bs pour le type du message reçu avec les profils utilisateurs de la base de données utilisateurs Bu.

Le module de transfert de messages 50 est prévu pour envoyer le message reçu à la communauté d'utilisateurs définie précédemment.

Le procédé de mise en relation selon l'invention est décrit ci-après en relation avec la Fig. 1. Pour plus de simplicité, l'utilisateur-émetteur est nommé utilisateur A dans la suite de la description.

On remarquera que le procédé selon l'invention est utilisable par tout type de personne et notamment une personne seule souhaitant recevoir des informations d'autres personnes ou un groupe de personnes, par exemple une société d'informations météorologiques, souhaitant joindre plusieurs personnes pour leur communiquer des informations.

Dans une première étape 0, les personnes souhaitant avoir accès au procédé de mise en relation selon l'invention et donc devenir utilisateurs, s'inscrivent en donnant leurs profils généraux et particuliers respectifs au système mettant en oeuvre le procédé selon l'invention. L'ensemble des données entrées par chaque utilisateur est inscrit dans la base de données utilisateurs Bu.

On notera que les données d'inscription sont liées au type d'utilisation du procédé et ne sont en aucun cas limitées à celles citées. Le type d'utilisation du procédé est défini en fonction des informations entrées par l'utilisateur.

Une fois inscrit, un utilisateur peut immédiatement ou ultérieurement être mis en relation avec d'autres utilisateurs, par exemple pour recevoir des informations ou de l'aide. Pour cela, il émet un message, par exemple sous la forme d'un SMS, d'un MMS ou d'un message vocal. L'émission du message correspond à l'étape 1 représentée à la Fig. 1. Dans ce message, l'utilisateur A aura notamment indiqué par une étiquette sémantique le sujet de son message permettant de définir un type de message. De préférence, le type de message est placé en début de message et est suivi du message proprement dit sous forme explicite. Le message émis par l'utilisateur A est reçu par le système S qui le transmet, d'une part, au module d'analyse 10 et, d'autre part, au module de transfert 50.

Le message réceptionné par le module d'analyse de messages 10, est analysé pour en extraire le type (Étape 2). Le type de message extrait est ensuite transmis au module de détermination d'une communauté d'utilisateurs 30.

Le module de détermination d'une communauté d'utilisateurs 30 sélectionne ensuite les utilisateurs susceptibles d'être concernés par le type de message émis par l'utilisateur A. A cet effet, dans un premier temps, le module de détermination d'une communauté d'utilisateurs 30 consulte la base de données système Bs et en extrait les critères d'utilisation des informations de profils correspondant au type de message de l'utilisateur A (Étape 4a), puis dans un second temps, il consulte la base de données utilisateurs Bu et effectue un tri des utilisateurs de la base en choisissant ceux dont les profils généraux et particuliers correspondent aux critères d'utilisation des informations de profils obtenus (Étape 4b). A l'issue de cette double consultation, la communauté des utilisateurs B, C et D est définie. La liste des utilisateurs B, C et D et l'adresse de leurs terminaux respectifs obtenues par le module de détermination d'une communauté d'utilisateurs 30 sont associées au type de message qui circule entre les différents modules 10, 30 et 50.

On notera également qu'une personne E non inscrite, mais possédant un terminal de télécommunication et se trouvant dans une zone proche d'une personne souhaitant être mise en relation avec d'autres personnes, peut être inscrite par le système à l'aide de l'adresse de son terminal dans la base de données utilisateurs Bu de manière à être considérée comme utilisateur et d'être éventuellement contactée (Etape 1').

L'invention prévoit en outre que dans le cas d'un message considéré comme urgent, celui-ci soit en outre transmis à des personnes prédéterminées. Dans une application liée à la sécurité, il peut s'agir de la sécurité civile ou des pompiers.

Le message ainsi formulé est transmis au module de transfert de messages 50. Ce module 50 réceptionne donc avantageusement, d'une part, le type de message accompagné d'informations sur la communauté des utilisateurs B, C, D, et E définie et, d'autre part, le message proprement dit sous forme explicite. Le module de transfert 50 effectue ensuite la transmission du message complet aux utilisateurs B, C, D et E formant la communauté (Étape 6). Les utilisateurs B, C, D et E peuvent ensuite choisir d'engager ou non le dialogue avec l'utilisateur A.

On notera que le message reçu de l'utilisateur A par le système S et le message transmis par le système S aux utilisateurs B, C, D et E sélectionnés pourraient n'être qu'un type de message sans message explicite l'accompagnant.

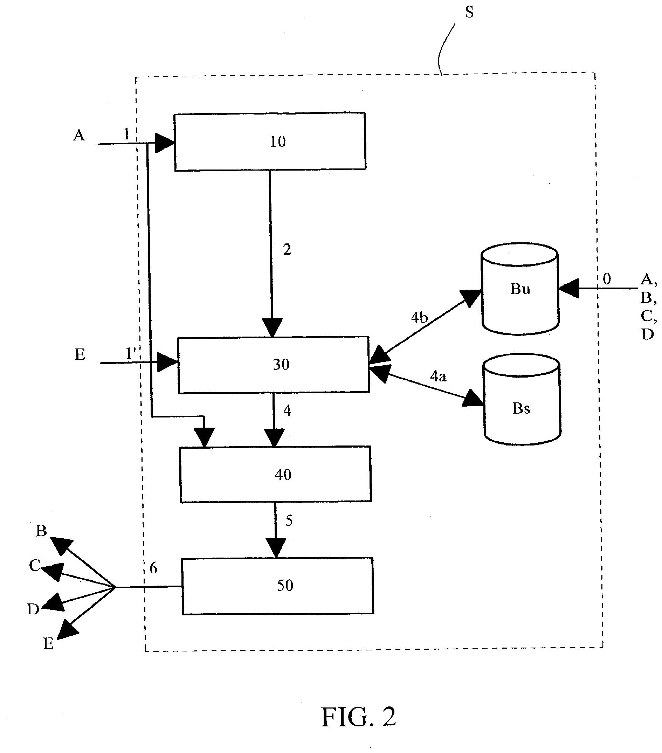

On a représenté aux Figs. 2, 3 et 4 les différentes variantes du procédé selon l'invention. Dans la première variante représentée à la Fig. 2, le système comporte en outre un module d'adaptation aux terminaux 40 placé entre le module de détermination d'une communauté d'utilisateurs 30 et le module de transfert de messages 50. Ce module d'adaptation aux terminaux 40 est prévu pour adapter le message à chacun des terminaux de communication des utilisateurs de la communauté précédemment définie. Cette fonctionnalité est nécessaire dans le cas où l'utilisateur A peut émettre un message de trois manières différentes, à savoir par un SMS (Short Message Service), par un MMS (Multimedia Messaging Service) ou par un message vocal.

Le rôle du module d'adaptation est tel qu'après réception, d'une part, du type du message et, d'autre part, du message proprement dit, il effectue l'adaptation du message complet. Le message prend la forme d'un MMS lorsque le message d'origine est un MMS et que le terminal de l'utilisateur cible a la possibilité de recevoir un MMS, soit la forme d'un SMS dans les autres cas, c'est-à-dire lorsque le message de l'utilisateur A est un SMS ou un message vocal ou lorsque le terminal des personnes de la communauté ne peut recevoir de MMS. Le module d'adaptation 40 transmet le message adapté au module de transfert de messages 50.

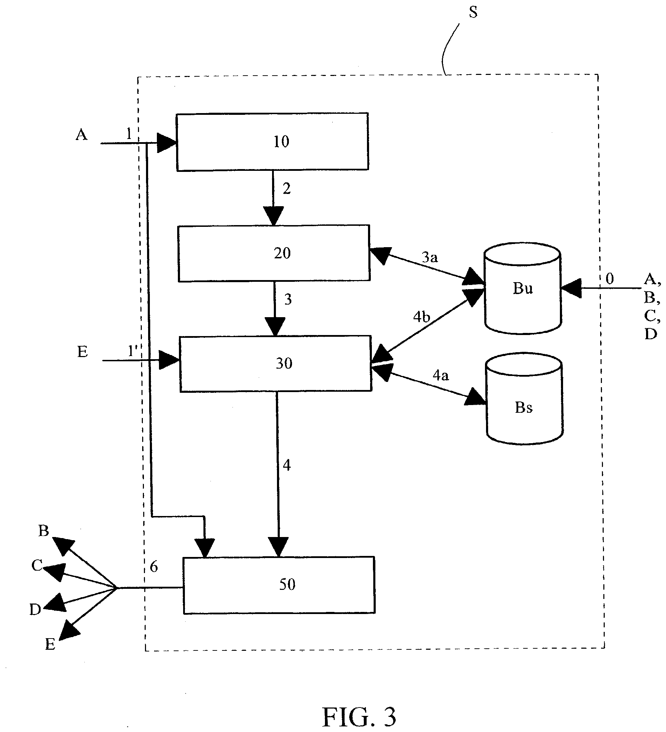

Une seconde variante du procédé selon l'invention est représentée à la Fig. 3. Dans cette variante, le système S tel que décrit en rapport avec la Fig. 1, comporte en outre un module de localisation 20 placé entre le module d'analyse de messages 10 et le module de détermination d'une communauté d'utilisateurs 30. Le module de localisation 20 est prévu pour situer géographiquement l'utilisateur A. Si l'utilisateur A ne dispose pas d'un terminal de communication pourvu d'un système de positionnement GPS (Global Positioning System), le module de localisation 20 localise l'utilisateur A en interrogant, d'une part, un serveur de localisation comportant des moyens de localisation de la cellule GSM du terminal de l'utilisateur à localiser, et d'autre part, la base de données utilisateurs Bu de laquelle le module de localisation 20 reçoit les informations de localisation inscrites dans le profil particulier de l'utilisateur à localiser (Étape 3a). Par extrapolation entre les données de la base de données utilisateurs Bu et la réponse du serveur de localisation, le module obtient une position géographique relativement précise de l'utilisateur A. Cette donnée de localisation est ajoutée au message qui est transmis au module de détermination de la communauté d'utilisateurs 30.

On remarquera que le module de localisation 20 suit de manière régulière l'évolution de la position des utilisateurs et la modifie en conséquence dans la base de données utilisateurs Bu.

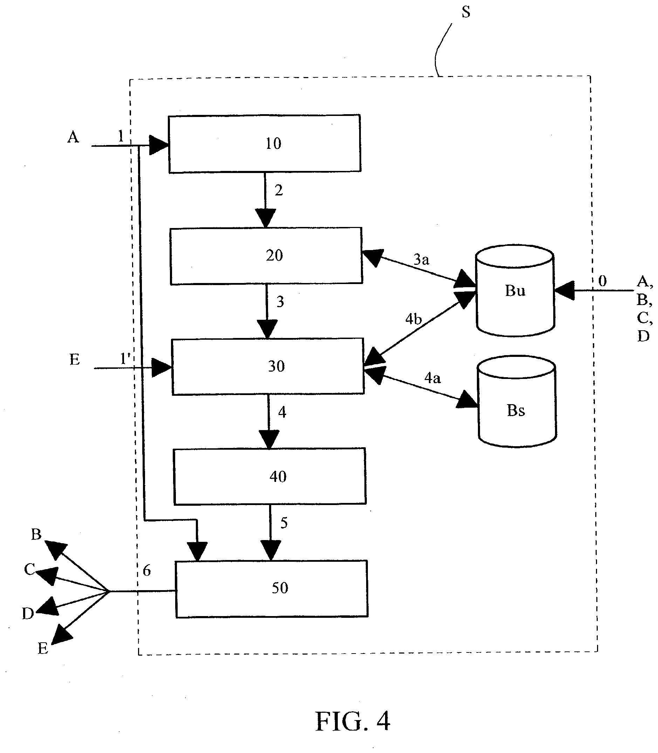

Une troisième variante du procédé selon l'invention est représentée à la Fig. 4. Dans cette variante, le système S permettant de mettre en oeuvre le procédé selon l'invention comporte l'ensemble des modules décrits précédemment. Le procédé consiste alors à mettre en relation un utilisateur A en effectuant successivement une analyse de son message, une localisation, une détermination de communauté, une adaptation du message et un transfert du message aux utilisateurs de la communauté déterminée.

Le procédé selon l'invention trouve application dans le milieu sportif notamment. On peut citer à titre d'exemple la randonnée qui peut s'effectuer sur une longue durée le long de chemins bien repérés géographiquement et au cours de laquelle un besoin d'informations ou d'assistance peut se faire sentir.

## Revendications

1. Procédé de mise en relation d'un utilisateur (A) émettant un message d'un terminal de télécommunication avec une communauté d'utilisateurs, **caractérisé en ce qu'**il consiste, après réception dudit message, à analyser ledit message (2) afin d'en déterminer le type, à établir une communauté d'utilisateurs (B, C, D) susceptibles d'être concernés par ce message (4), d'une part, en déterminant à partir dudit type des critères d'utilisation d'informations de profil stockés dans une base de données système (Bs) et, d'autre part, en sélectionnant des utilisateurs enregistrés au préalable en même temps que leurs profils respectifs dans une base de données utilisateurs (Bu) en faisant concorder lesdits critères avec lesdits profils desdits utilisateurs et à transmettre ledit message aux utilisateurs (B, C, D) de ladite communauté (6).

2. Procédé selon la revendication 1, **caractérisé en ce qu'**il consiste en outre à adapter la forme dudit message (5) à l'aide d'un module d'adaptation (40) de manière à ce qu'il puisse être reçu par les terminaux desdits utilisateurs (B, C, D) de ladite communauté.

3. Procédé selon la revendication 1 ou 2, **caractérisé en ce qu'**il consiste en outre à situer la position géographique (3) dudit utilisateur (A) émetteur du message à l'aide d'un module de localisation (20).

4. Procédé selon l'une des revendications précédentes, **caractérisé en ce qu'**il consiste à localiser (3a) ledit utilisateur (A) par corrélation entre les données issues de ladite base de données utilisateurs (Bu) et les données issues d'un serveur de localisation.

5. Système de mise en relation d'un utilisateur (A) émettant un message d'un terminal de télécommunication avec une communauté d'utilisateurs, **caractérisé en ce qu'**il comporte un module d'analyse de messages (10) prévu pour recevoir le message et l'analyser afin d'en déterminer le type, un module de détermination d'une communauté d'utilisateurs (30) prévu pour établir une communauté d'utilisateurs (B, C, D) susceptibles d'être concernés par ce message, une base de données système (Bs) prévue pour stocker des critères d'utilisation d'informations de profil et des types de messages, une base de données utilisateurs (Bu) prévue pour stocker des profils utilisateurs généraux et particuliers et un module de transfert de messages (50) prévu pour transmettre ledit message aux utilisateurs (B, C, D) de ladite communauté.

6. Système selon la revendication 5, **caractérisé en ce qu'**il comporte en outre un module d'adaptation aux terminaux de télécommunication (40).

7. Système selon la revendication 5 ou 6, **caractérisé en ce qu'**il comporte en outre un module de localisation (20).

## Patentansprüche

1. Verfahren zur Herstellung einer Verbindung eines Benutzers (A), der eine Nachricht von einem Telekommunikationsendgerät sendet, mit einer Gemeinschaft von Benutzern, **dadurch gekennzeichnet, dass** es darin besteht, nach Empfang der Nachricht die Nachricht (2) zu analysieren, um ihren Typ zu bestimmen, eine Gemeinschaft von Benutzern (B, C, D), die von dieser Nachricht (4) betroffen sein könnten, zu ermitteln, indem einerseits aus dem Typ Kriterien der Nutzung von Profilinformationen bestimmt werden, die in einer Systemdatenbank (Bs) gespeichert sind, und indem andererseits Benutzer, die zuvor gleichzeitig mit ihren jeweiligen Profilen in einer Benutzerdatenbank (Bu) registriert wurden, ausgewählt werden, indem die Kriterien mit den Profilen dieser Benutzer abgestimmt werden, und die Nachricht zu den Benutzern (B, C, D) der Gemeinschaft (6) zu übertragen.

2. Verfahren nach Anspruch 1, **dadurch gekennzeichnet, dass** es außerdem darin besteht, die Form der Nachricht (5) mithilfe eines Anpassungsmoduls (40) so anzupassen, dass sie von den Endgeräten der Benutzer (B, C, D) der Gemeinschaft empfangen werden kann.

3. Verfahren nach Anspruch 1 oder 2, **dadurch gekennzeichnet, dass** es außerdem darin besteht, die geographische Position (3) des Benutzers (A), welcher der Absender der Nachricht ist, mithilfe eines Lokalisierungsmoduls (20) zu lokalisieren.

4. Verfahren nach einem der vorhergehenden Ansprüche, **dadurch gekennzeichnet, dass** es darin besteht, den Benutzer (A) durch Korrelation zwischen den Daten, die aus der Benutzerdatenbank (Bu) stammen, und den Daten, die von einem Standortserver stammen, zu lokalisieren (3a).

5. System zur Herstellung einer Verbindung eines Benutzers (A), der eine Nachricht von einem Telekommunikationsendgerät sendet, mit einer Gemeinschaft von Benutzern, **dadurch gekennzeichnet, dass** es umfasst: ein Modul zur Analyse von Nachrichten (10), das dafür vorgesehen ist, die Nachricht zu empfangen und sie zu analysieren, um ihren Typ zu bestimmen, ein Modul zur Bestimmung eine Gemeinschaft von Benutzern (30), das dafür vorgesehen ist, eine Gemeinschaft von Benutzern (B, C, D), die von dieser Nachricht betroffen sein könnten, zu ermitteln, eine Systemdatenbank (Bs), die dafür vorgesehen ist, Kriterien der Nutzung von Profilinformationen und Typen von Nachrichten zu speichern, eine Benutzerdatenbank (Bu), die dafür vorgesehen ist, allgemeine und spezielle Benutzerprofile zu speichern, und ein Nachrichtenübertragungsmodul (50), das dafür vorgesehen ist, die Nachricht zu den Benutzern (B, C, D) der Gemeinschaft zu übertragen.

6. System nach Anspruch 5, **dadurch gekennzeichnet, dass** es außerdem ein Modul zur Anpassung an die Telekommunikationsendgeräte (40) umfasst.

7. System nach Anspruch 5 oder 6, **dadurch gekennzeichnet, dass** es außerdem ein Lokalisierungsmodul (20) umfasst.

## Claims

1. Method for connecting a user (A), sending a message from a telecommunications terminal, to a community of users, **characterized in that** it consists, after reception of said message, in analysing said message (2) so as to determine the type thereof, in establishing a community of users (B, C, D) to whom this message (4) is potentially relevant, firstly by determining, from said type, criteria for using profile information, said criteria being stored in a system database (Bs), and, secondly, by selecting users registered beforehand at the same time as their respective profiles in a user database (Bu) by matching said criteria with said profiles of said users and in transmitting said message to the users (B, C, D) of said community (6).

2. Method according to Claim 1, **characterized in that** it furthermore consists in adapting the form of said message (5) using an adaptation module (40) such that it is able to be received by the terminals of said users (B, C, D) of said community.

3. Method according to Claim 1 or 2, **characterized in that** it furthermore consists in locating the geographical position (3) of said user (A) sending the message using a locating module (20).

4. Method according to one of the preceding claims, **characterized in that** it consists in locating (3a) said user (A) by correlating the data originating from said user database (Bu) with the data originating from a location server.

5. System for connecting a user (A), sending a message from a telecommunications terminal, to a community of users, **characterized in that** it includes a message analysis module (10) intended to receive the message and analyse it so as to determine the type thereof, a module (30) for determining a community of users, intended to establish a community of users (B, C, D) to whom this message is potentially relevant, a system database (Bs) intended to store criteria for using profile information and message types, a user database (Bu) intended to store general and specific user profiles and a message transfer module (50) intended to transmit said message to the users (B, C, D) of said community.

6. System according to Claim 5, **characterized in that** it furthermore includes a module (40) for adaptation to the telecommunications terminals.

7. System according to Claim 5 or 6, **characterized in that** it furthermore includes a locating module (20).
